# EUROPEAN PATENT APPLICATION

(11) **EP 2 085 451 A1**
(43) Date of publication of application: **05.08.2009**
(21) Application number: 07829275.2
(22) Date of filing: 01.10.2007
(51) Int. Cl.: C09K 11/08, C09K 11/59, C09K 11/64, C09K 11/80, G08B 5/00, G09F 13/20, H01J 61/44

(54) **LUMINOUS PHOSPHOR, FLUORESCENT LAMP, LUMINOUS DISPLAY, AND LUMINOUS MOLDED PRODUCT**

(30) Priority: 02.10.2006 JP 2006270711
(71) Applicant: Kasei Optonix Ltd., Odawara-shi Kanagawa 250-0862 (JP)
(72) Inventor: MATSUHISA, Noboru, Kanagawa 250-0862 (JP); TATSUTA, Yoshitaka, Kanagawa 250-0862 (JP)
(74) Representative: TBK-Patent
(86) International application number: PCT/JP2007/069537
(87) International publication number: WO 2008/041760

(57) **Abstract**

There are provided a long persistent phosphor capable of keeping high persistent intensity and white persistence of especially satisfactory color purity after the phosphor is excited by ultraviolet irradiation and then the excited light is cut off, and a fluorescent lamp, a display item of long persistence and a formed product of long persistence in which the phosphor is used.

A long phosphorescence persistent phosphor which comprises a mixture or mutual deposit of the first phosphor emitting long persistence in the first wave range by ultraviolet absorption, which is one or more than two of the following phosphors (i) and (ii), and a second phosphor which is excited by at least a part of emission of the first phosphor.

Magnesium-strontium silicate phosphor (i) prepared by co-activating a complex-oxide containing Sr, Mg and Si as a matrix metal component with Eu and Dy.

Strontium-aluminum silicate phosphor (ii) prepared by co-activating a complex-oxide containing Sr, Al and Si as a matrix metal component with europium Eu and Dy.

The long persistent phosphor is used as a fluorescent screen to prepare a fluorescent lamp, applied to a displaying part to prepare a display item of long persistence or added to plastics and other materials and formed into a desired shape to prepare a formed product.

## Description

### Technical Field

This invention relates to a long persistent phosphor comprising a plurality of phosphors, one of which emits phosphorescence of long persistence by ultraviolet absorption from sun light, fluorescent lamps, etc., and a fluorescent lamp, a phosphorescent display item of long persistence such as escape guiding marks and other things and a phosphorescent formed product of long persistence in which the long persistent phosphor is used.

### Background of the Invention

Recently, there has been urged safety and adequate measures for escape guiding against an unexpected blackout out of doors or in multistory buildings, subways and private houses located in big cities under a disastrous condition caused by an earthquake or tidal wave. In order to escape from such a disaster and guide people to a safe area, there has been used many kinds of long persistent phosphor applied-escape guiding marks and long persistent sheets or tapes to be put on steps and handrails, which emit fluorescence for a long period of time during blackout or night.

This kind of phosphor is further applied to a fluorescent screen of fluorescent lamps for domestic and office use, a diffuser plate or cover sheet and a switch thereof. In addition, as the long persistent phosphor is also applied to display walls or used as various items made of plastics, such as toys and fishing tackles, or glass, ceramic and pottery items, it is highly expected to develop those long persistent phosphors of higher luminance and many phosphorescent colors useful for variety of purposes.

There have been conventionally known sulfide type phosphors, such as (Ca, Sr)S:Bi phosphor of blue color, ZnS:Cu of yellow green color and (Zn, Cd)S:Cu phosphor of red color, as a long persistent phosphor useful for above mentioned purposes.

However, the (Ca, Sr)S:Bi has very poor stability of its matrix and insufficient luminance and persistency. On the other hand, the (Zn, Cd)S:Cu phosphor is now scarcely used because of its toxic Cd content in about half an amount of the matrix and also insufficient luminance and persistency thereof. The ZnS:Cu phosphor is inexpensive and thus considerably used for escape guiding marks, indoor night displays but has visually recognizable persistency of not longer than one or two hours and poor weatherability.

Complex-oxide type phosphors have been recently developed as a novel phosphor of long persistency and high luminance and include Eu- and Dy-activated Sr-Mg-Si complex-oxide phosphor emitting a blue color (see, Japanese Registered Patent No. 3,257,942), SrAl₂O₄:Eu, Dy emitting a green color (see, Japanese Registered Patent No. 2,543,825), Sr₄Ah₄O₂₅:Eu, Dy emitting a greenish blue color (see, Japanese Registered Patent No. 2,697,688) and Sr₂SiO₄:Eu, Dy, SrAl₂Si₂O₈:Eu, Dy and Sr₆Al₁₈Si₂O₃₇:Eu, Dy (see, Japanese Patent A No. 2004-359,701).

As latest displaying methods or measures are diversified, long persistent phosphors of various colors applicable to a specific place or purpose have been required and especially "easy on the eyes" type phosphors emitting a natural white color and high luminance are expected to develop.

A phosphor represented by the following compositional formula:

(Ca_{1-p-q-r}EuₚNd_{q}Mnᵣ)O (Al₁₋ₘBₘ)₂O₃ kP₂O₃

is known as a conventional long persistent phosphor emitting a white color (see, Japanese Patent A No. 1996-151,573), but is not practically used because the persistency is not enough and the chromaticity of white color is about (x / y = 0.300 / 0.400), which is far from that of a desired value (x / y = 0.300 / 0.300).

Japanese Patent A No. 2005-330,459 describes a fluorescent lamp comprising a plurality of phosphors, which consist of a long persistent phosphor emitting a first emission spectrum by energy absorption of an excitation source and a second phosphor emitting a second emission spectrum different from the first spectrum by converting at least a part thereof, and a fluorescent screen formed by layering the long persistent phosphor emitting the first emission spectrum and the second phosphor.

An example of the above mentioned long persistent phosphor includes sulfide phosphors, aluminate phosphors activated by a specific rare earth element, oxysulfide phosphors and the like, while the second phosphor includes Ce-activated yttrium oxide aluminum phosphors, rare earth activated nitride phosphors, rare earth activated oxynitride phosphors, Eu-activated silicate phosphors, etc.

According to the above mentioned patent, each phosphor, fluorescent lamp and emission device comprises a fluorescent screen coated with a layer of two kinds of phosphors and has structure to use specific transmitted light. Further, with regard to the emission color, the chromaticity point is about x / y = 0.302 / 0.375 even when the color is most nearly to real white, which is considerably different from that of the real one ( x / y = 0.300 / 0.300), thereby causing phosphorescent persistence emitting white color of poor purity.

Accordingly, it has been expected to develop a long persistent phosphor and applied products thereof such as a display board stimulated by ultraviolet irradiation from sun light out of doors or by a fluorescent lamp emitting ultraviolet light, which exhibits strong and long-lasting phosphorescent persistence of a white color having especially improved color purity.

### Disclosure of the Invention

This invention has been completed in the light of the present condition as described above. It is an object of this invention to provide a long persistent phosphor and a fluorescent lamp, a phosphorescent display item of long persistence and a phosphorescent formed product of long persistence.

The inventors have studied the long persistence exhibited by variety of phosphors and achieved this object as in the following. A mixed phosphor, which comprises a long persistent phosphor of a specific composition emitting by excitation through ultraviolet irradiation, sun light or ultraviolet light from fluorescent lamps and a phosphor emitting in a wave range different from that of said long persistent phosphor by absorbing at least a part of emission thereof, is used as a fluorescent screen for a fluorescent lamp and as a displaying part for phosphorescent display item of long persistent or added to plastics to form a phosphorescent formed product of long persistence.

This invention is constructed by the following matters 1 to 13.
1. A long persistent phosphor which comprises a mixture or mutual deposit of a first phosphor emitting long persistence in a first wave range by ultraviolet absorption and a second phosphor emitting phosphorescence in a second wave range by at least partial absorption of phosphorescence in said first wave range, in which said first phosphor is at least one of a magnesium-strontium silicate phosphor (i) prepared by co-activating a complex-oxide containing strontium (Sr), magnesium (Mg) and silicon (Si) as a matrix metal component with europium (Eu) and dysprosium (Dy) and a strontium-aluminum silicate phosphor (ii) prepared by co-activating a complex-oxide containing strontium (Sr), aluminum (Al) and silicon (Si) as a matrix metal component with europium (Eu) and dysprosium (Dy).
2. A long persistent phosphor described in the item 1 in which said magnesium-strontium silicate phosphor (i) is represented by the following compositional formula:

   *m*(Sr₁₋ₐM¹ₐ)O *n*(Mg_{1-b}M²_{b})O 2(Si_{1-c}Ge_{c})O₂ : EuₓDy_{y}

   wherein M¹ represents one or more than two elements selected from Ca and Ba, M² represents one or more than two elements selected from Be, Zn and Cd and a, b, c, x, *m*, *n*, x and y are a numeral satisfied by requirements of 0 ≤ a ≤ 0.80, 0 ≤ b ≤ 0.2, 0 ≤ c ≤ 0.2, 1.5 ≤ *m* ≤ 3.5, 0.5 ≤ *n* ≤ 1.5, 1 x 10⁻⁵ ≤ x ≤ 1 x 10⁻¹ and 1 x 10⁻⁵ ≤ y ≤ 1 x 10-1 and said strontium-aluminum silicate (ii) is represented by the following compositional formula:

   (Sr₁₋ₓMₓ)O *a*Al₂O₃ *b*SiO₂ : Eu, Dy

   wherein M represents one or more than two elements selected from Ca and Ba, and x, a and b are a numeral satisfied by requirements of 0 ≤ x ≤ 0.3, 0 ≤ *a* ≤ 2 and 0 < *b* ≤ 2.
3. A long persistent phosphor described in the item 2 in which said magnesium-strontium silicate phosphor (i) is represented by a compositional formula of Sr₂MgSbO₇ : Eu, Dy.
4. A long persistent phosphor described in any item 1 to 3 in which said magnesium-strontium silicate phosphor (i) and/or said strontium-aluminum silicate phosphor (ii) contain halogen (X) or boron (B).
5. A long persistent phosphor described in the item 4 in which a content of said halogen (X) is 0.1 gram atom or less and that of said boron (B) is 0.6 gram atom or less per one mole of said phosphor matrix, respectively.
6. A long persistent phosphor described in any item 1 to 5 in which a mixed color of fluorescence and phosphorescence in said first wave range and said second wave range is white.
7. A long persistent phosphor described in any item 1 to 6 in which a content of said first phosphor is 30 to 99.5 % by weight of the long persistent phosphor in total amount.
8. A long persistent phosphor described in the item 7 in which a content of said first phosphor is 30 to 99 % by weight.
9. A long persistent phosphor described in the item 7 in which a content of said first phosphor is 40 to 98 % by weight.
10. A long persistent phosphor described in any item 1 to 9 in which said second phosphor is a cerium (Ce) and terbium (Tb)-co-activated rare earth aluminate phosphor represented by a compositional formula: (Y_{1-x-y}GdₓSm_{y})₃Al₅O₁₂ : Ce, Tb or a cerium (Ce)-activated rare earth aluminate phosphor represented by a compositional formula: (Y_{1-x-y}GdₓSm_{y})₃Al₅O₁₂ : Ce wherein x and y are a numeral satisfied by requirements of 0 ≤ x ≤ 1, 0 ≤ y < 1 and x + y ≤ 1.
11. A fluorescent lamp in which a long persistent phosphor described in any item 1 to 10 is used as a fluorescent screen.
12. A fluorescent display item of long persistence in which at least a part of letters, figures and/or images of a displaying part is formed by a long persistent phosphor described in any item 1 to 10.
13. A long phosphorescent formed product of long persistence which comprises a long persistent phosphor described in any item 1 to 10.

### BRIEF DESCRIPTION OF THE DRAWINGS

Fig. 1 is emission spectra of the first phosphor as one component of long persistent phosphors of this invention, in which curves a and b show spectra of a Sr₂MgSi₂O₇:Eu, Dy phosphor and a SrO 1.4 Al₂O₃ 0.2 SiO₂ 0.2 B₂O₃:Eu, Dy phosphor, respectively.
Fig. 2 is emission spectra of the second phosphors as the other component of this invention, in which curves c, d and e show spectra of a (Y, Gd)₃Al₅O₁₂:Ce phosphor, an improved phosphor thereof and a Y₃Al₅O₁₂:Ce, Tb phosphor, respectively.
Fig. 3 is excitation spectra to emit each of the second phosphors, in which curves f, g and h show a (Y, Gd)₃Al₅O₁₂:Ce phosphor, an improved phosphor thereof and a Y₃Al₅O₁₂:Ce, Tb phosphor, respectively.

### Effects of the Invention

The long persistent phosphor of this invention is a mixed phosphor comprising the first phosphor of high luminance and long persistence after the excitation light is cut off and the second phosphor of excitation wavelength well compatible with the emission wave range of the first phosphor, thereby phosphorescent persistence of high luminance being kept. Phosphorescent emission and persistence of satisfied white color in high purity or various colors can be obtained by properly selecting the first and the second phosphors.

Similarly, it is possible to obtain phosphorescent persistence of high luminance in a fluorescent lamp, a phosphorescent display item of long persistence and a phosphorescent formed product of long persistence.

### PREFERRED EMBODIMENTS OF THE INVENTION

This invention will be detailed in the following.

The long persistent phosphor of this invention is a mixture comprising the first phosphor, which will be described later, emitting phosphorescence of long persistence as the first emission in the first wave range by excitation through ultraviolet irradiation, sun light or ultraviolet light from fluorescent lamps and the second phosphor emitting phosphorescence as the second emission in a wave range different from the first wave range excited by absorbing at least a part of the first phosphor emission. Because of the above mentioned structure of the present long persistent phosphor, the first phosphor is excited by ultraviolet irradiation to emit the first emission during such an excited situation by excitation light, while the second phosphor is excited by emission of the first phosphor to emit the second emission, thereby causing mixed emission thereof.

Even after the excitation light is cut off, the second phosphor is excited by absorbing the persistence of the first emission from the first phosphor to emit the second emission and thus it makes it possible to continuously emit phosphorescence of mixed colors comprising the first persistent emission and the second emission.

The above mentioned first phosphor is a so-called long persistent phosphor independently emitting long persistent phosphorescence by ultraviolet excitation. There is used at least one of the following complex-oxide phosphors (i) and (ii) as the first phosphor of the present invention:
Magnesium-strontium silicate (i) prepared by co-activating a complex-oxide containing Sr, Mg and Si as a matrix metal component with Eu and Dy ,and
Strontium-aluminum silicate phosphor (ii) prepared by co-activating a complex-oxide containing Sr, Al and Si as a matrix metal component with Eu and Dy.

A preferable phosphor used as the first phosphor is represented by the compositional formula:

*m*(Sr₁₋ₐM¹ₐ)O *n*(Mg_{1-b}M²_{b})O 2(Si_{1-c}Ge_{c})O₂ : EuₓDy_{y}

wherein M¹ represents one or more than two elements selected from Ca and Ba, M² represents one or more than two elements selected from Be, Zn and Cd and a, b, c, x, *m*, *n*, x and y are a numeral satisfied by requirements of 0 ≤ a ≤ 0.80, 0 ≤ b ≤ 0.2, 0 ≤ c ≤ 0.2, 1.5 ≤ *m* ≤ 3.5, 0.5 ≤ *n* ≤ 1.5, 1 x 10⁻⁵ ≤ x ≤ 1 x 10⁻¹ and 1 x 10⁻⁵ ≤ y ≤ 1 x 10⁻¹, and more preferably is represented by the formula: Sr₂MgSbO₇ : Eu, Dy among the above mentioned magnesium-strontium silicate phosphor (i) from a viewpoint of the phosphorescent persistence and the lasting time.

A preferable strontium-aluminum silicate phosphor (ii) is represented by the compositional formula:

(Sr₁-ₓMₓ)O *a*Al₂O₃ *b*SiO₂ : Eu, Dy

wherein M represents one or more than two elements selected from Ca and Ba, and x, a and b are a numeral satisfied by requirements of 0 ≤ x ≤ 0.3, 0 ≤ *a* ≤ 2 and 0 < *b* ≤ 2.

It is possible to increase the emission intensity and the phosphorescent persistence of the magnesium-strontium silicate phosphor (i) and/or the strontium- aluminum silicate phosphor (ii) by adding halogen in an amount of 0.1 gram atom or less or boron in an amount of 0.6 gram atom or less per each phosphor matrix, respectively.

The second phosphor used in the invention is not limited to a specific one, if the phosphor is excited by absorbing at least a part of emission of the first phosphor to emit phosphorescence different from color of the first emission. As the first phosphor emits blue or greenish blue phosphorescence, it is favorable to select a phosphor emitting yellow fluorescence as an additive complementary color of the first one or a mixture of phosphors emitting green and red colors independently so as to yield a long persistent phosphor emitting white phosphor as a mixed color with the first emission.

When a Ce-activated rare earth aluminate phosphor represented by the compositional formula: (Y_{1-x-y}GdₓSm_{y})₃Al₅O₁₂:Ce is used as the second phosphor, for example, wavelength matching between an excitation spectrum of this phosphor and an emission spectrum of the first phosphor is quite satisfactory. This is because of a wide duplication of the wave range of the first emission and the excitation wave range of the second phosphor, so that the second one is effectively excited by persistent phosphorescence of the first phosphor to cause emission of markedly high luminous efficacy, which makes it possible to conveniently keep such an emission of high luminance even after the excitation light is cut off.

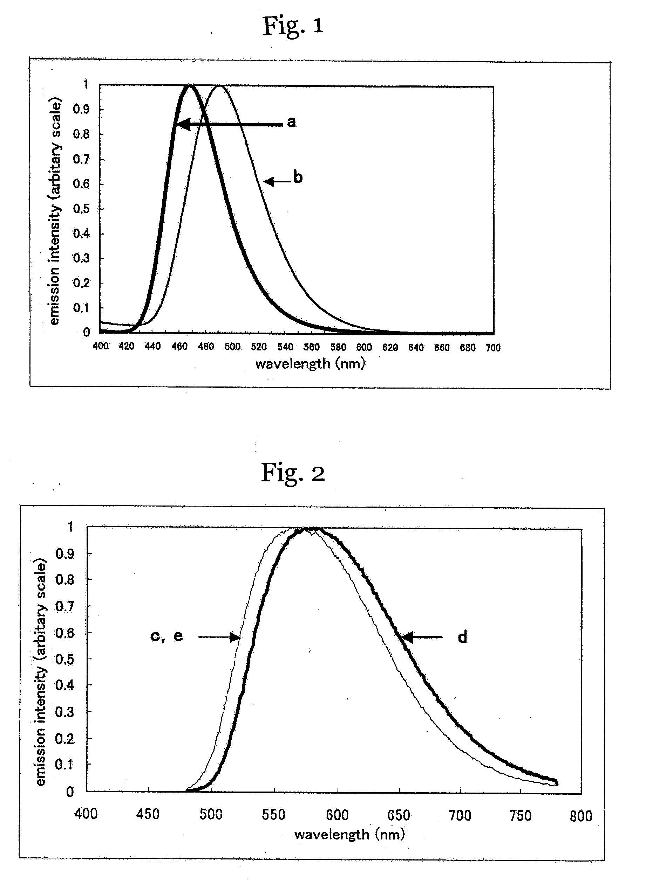

Fig. 1 is a graph of emission spectra when the first phosphors as one component of the present long persistent phosphor are excited by ultraviolet irradiation of 365 nm in wavelength, in which curves a and b show Sr₂MgSi₂O₇:Eu, Dy and SrO 1.4Al₂O₃ 0.2SiO₂ B O₃:Eu, Dy as the phosphors (i) and (ii), respectively.

As is clear from Fig. 1, the magnesium-strontium silicate phosphor (i) emits blue phosphorescence showing peak wavelength of emission spectrum at about 467nm, while the strontium-aluminum silicate phosphor (ii) emits greenish blue one at about 490 nm.

Fig. 2 is a graph of emission spectra when the second phosphors as the other component of the present invention are excited by a light source of 460 nm in wavelength close to the emission peak wavelength of the phosphor (i), in which curves c, d and e show a (Y, Gd)₃Al₅O₁₂:Ce phosphor, an improved phosphor thereof and a Y₃Al₅O₁₂:Ce, Tb phosphor, respectively. The improved phosphor is prepared by further firing the originally once fired phosphor (Y, Gd)₃Al₅O₁₂:Ce in a specific atmosphere to improve emission luminance thereof, which is available from KASEI OPTONIX, LTD. as an item number: KX-692B and hereinafter referred to as an improved (Y, Gd)₃Al₅O₁₂:Ce phosphor.

As is clear from Fig. 2, the second phosphors emit yellow fluorescence showing peak wavelength of emission spectrum in a range of 560 to 580 nm.

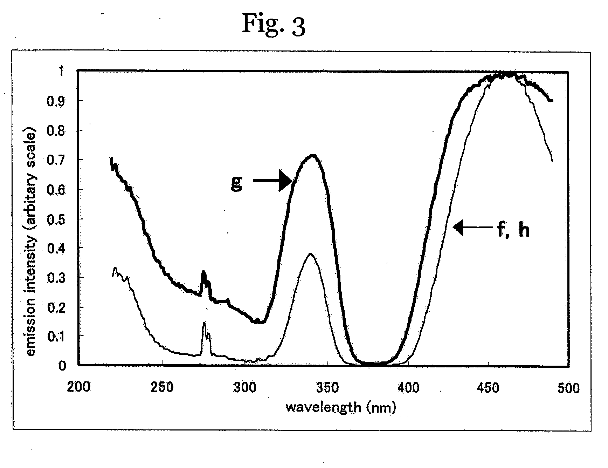

Fig. 3 is a graph of excitation spectra to emit each of the second phosphors showing a correlation of the excitation wavelength to excite each phosphor and the emission intensity at peak wavelength when the phosphor is irradiated by the excitation light, in which curves f, g and h show a (Y, Gd)₃Al₅O₁₂:Ce phosphor, the improved (Y, Gd)₃Al₅O₁₂:Ce phosphor and a Y₃Al₅O₁₂:Ce, Tb phosphor, respectively.

It is apparent from Figs. 1 and 3 that the peak wavelength of excitation spectra of the second phosphors as one component of the present persistent phosphor resides with in a wave range around about 460 nm and, accordingly, matching thereof with the emission peak wave range of the first phosphor, especially with that of the Sr₂MgSi₂O₇:Eu, Dy phosphor as shown in Fig. 1 (curve a) is quite satisfactory. This fact proves that the yellow phosphorescence of the second phosphor is emitted effectively by emission of the first phosphor and is mixed with blue phosphorescence of the first phosphor to emit white phosphorescence with high efficacy.

When the magnesium-strontium phosphor (i) and the improved Ce-activated rare earth alminate phosphor are used as the first and the second phosphors, the former emits blue and the latter emits yellow phosphorescence of high color purity, respectively. The long persistent phosphor of such a combination as described above makes it possible to emit white phosphorescence of high color purity not only when the phosphor is irradiated by an excitation light source such as ultraviolet irradiation but even after the light is cut off.

The long persistent phosphor of this invention may be prepared by mechanically mixing the first and the second phosphors by means of a mixing means such as ball milling or V-blender.

The present phosphor may also be prepared by suspending the first and the second phosphors in a solvent containing a binder such as an acryl resin or gelatin, followed by known processes such as solid-liquid separation, dehydration and drying, to form a mutually deposited product of these phosphors with the binder.

In order to increase the emission intensity of persistent phosphorescence, it is more preferable to coat the surface of the second phosphor with the first one than simply mixing both phosphors.

With regard to a mixing ratio of the first and the second phosphors in the present long persistent phosphor, the first one is preferably used in the range of 30 to 99.5 % (i.e., the second one being 0.5 to 70 %), more preferably 30 to 99 %, and the most preferably 40 to 98 % by weight of the total amount of the present phosphor, although such the content may be decided depending on the emission color as well as the emission efficacy or the lasting time of persistent phosphorescence.

When the content of the first phosphor is less than 30 % by weight of the long persistent phosphor in total, the emission intensity due to the first phosphor decreases during excitation by ultraviolet irradiation and also after cutting-off of excitation, which tends to cause a decrease in persistency of the long persistent phosphor itself. Especially when the luminance is of much account, the content of the first phosphor is preferably more than 40 % by weight of the long persistent phosphor in total. However, from a viewpoint of the color purity as a white color of the long persistent phosphor thus prepared, the content of the first phosphor is less than 99.5 %, preferably 99 % and more preferably 98 % by weight, because the emission color, which is a mixed color of emissions of the first and the second phosphors, might cause deviation from white thereby deteriorating the color purity as a white color remarkably.

Particle size of the first and the second phosphors used in the long persistent phosphor of this invention is not especially restricted but may be fallen in the range of 1 to 3,000 µm or so and preferably 5 to 1,000 µm from a viewpoint of the color homogeneity. A color of nearly pure white may be obtained by selecting a ratio of the particle size of both phosphors properly even if their mixing ratio is considerably changed. However, the particle size of both phosphors is preferably in the range of 1 to 30 µm when the long persistent phosphor is used for lamps.

A fluorescent lamp of this invention is prepared in a similar manner as conventionally done except that the present long persistent phosphor is suspended in a solvent such as water with a binding agent such as glass powder of low melting point, fine particle metal oxide or fine particle metal borate or phosphate to yield a coating slurry of the phosphor, which is then coated on the inner surface of a glass valve and dried to form a layer of the phosphor.

In the fluorescent lamp of this invention, the first phosphor emits as the first emission due to ultraviolet irradiation caused by electric discharge in mercury vapor encapsulated in the glass valve and, at the same time, the second phosphor emits as the second emission due to ultraviolet irradiation as described above and also by absorption of the first emission, thereby emitting a mixed color comprising the first and the second emissions. As the first phosphor continues to emit the first emission even after electricity to the fluorescent lamp is cut off, the second phosphor contained in the fluorescent screen absorbs the first emission as the persistent phosphorescence and is excited to causes the second emission, so that the mixed color emission emitted from both phosphors as described above is kept continuously.

A phosphorescent display item of long persistence comprises a displaying part drawn letters, patterns and/or images with the long persistent phosphor of this invention on one or both surfaces of a base material including plastics such as an acryl or vinyl chloride resin, metal plate, woods, tile and the like. The long persistent phosphor of this invention may be used in, for example, a paint or ink to apply these letters, patterns and/or images on the base material, or may also be pre-mixed in the base material such as a formed plastic plate itself to be drawn such letters and other things on the surface thereon with variously colored paints or inks. The present phosphorescent display item of long persistence comprises a displaying part including at least a part of letters, patterns and/or images in which the long persistent phosphor of this invention is used.

A typical example of the present phosphorescent display item of long persistence includes escape guiding marks and lights comprising a cubic or cylindrical container and a backlight such as a fluorescent lamp built therein, the direction of emergency exits or stairs being displayed on at least one surface of a base material of the container by means of the present long persistent phosphor. According to the present phosphorescent display item of long persistence such as escape guiding marks or lights provided with a backlight behind the displaying part, the first phosphor used therein as one component of the present long persistent phosphor continuously emits persistent phosphorescence when the backlight is turned off due to, for example, power failure, thereby the second phosphor used therein as the other component being excited to itself emit phosphorescence, so that letters, patterns and/or images formed by a mixed color of the first and the second phosphors on the displaying part can be visually recognized even in the dark.

Conventionally, as there has been used no long persistent phosphor emitting white phosphorescence of high luminance, a silhouette is unavoidably drawn by a black color with a green background as an example of a typical escape guiding mark depicting a running figure, while in the case of the display item of this invention, the silhouette can be drawn by a green color similarly as a guiding light and a color of the background is white using the present long persistent phosphor, which emits white phosphorescence of high luminance, based on a recently revised regulation.

The present phosphorescent display item of long persistence is not only used in combination with a backlight as described above but may be independently shaped into a plate or sheet form and arranged indoors or outdoors on an appropriate place such as a floor or wall. The long persistent phosphor used in the display part is excited by outside ultraviolet irradiation from a fluorescent lamp or sun light to emit phosphorescence so that letters, patterns and/or images drawn on the displaying part can be visually recognized similarly as described above in the dark for a certain period of time after the lamp or sun light is cut off.

Another application of the present phosphorous display item of long persistence includes a watch face, a decorative display put on a wall prepared by drawing letters, patterns and/or images on the displaying part with a paint or ink containing the present phosphor and putting it in a frame, and a wall sheet comprising the present phosphor throughout a displaying part thereof for illuminating the wall surface during blackout.

A phosphorescent formed product of long persistence of this invention is prepared by adding a powder of the present long persistent phosphor to a plastic resin or synthetic rubber such as a acryl resin, vinyl chloride resin or synthetic rubber used as a starting material for conventional formed products and forming into desired two- and three-dimensional products or pre-mixing with a starting material such as glass, ceramics or tile to form into desired shapes.

The present phosphorescent formed product of long persistence includes various formed articles such as toys, fishing tackles, indoor switch plates, ornamental accessories and the like but is not limited to a specific shape, using environment or purpose, if the thus prepared product contains the present long persistent phosphor in a base material to be formed such as resins, ceramics, glass, etc.

### EXAMPLES

This invention will be further detailed in the following examples.

### Examples 1 to 3

Long persistent phosphors of Examples 1 to 3 were prepared by mixing a long persistent phosphor as the first phosphor represented by a compositional formula: Sr₂MgSl₂O₇:Eu, Dy (hereinafter referred to as phosphor A) and a phosphor of yellow emission as the second one represented by a compositional formula: (Y, Gd)₃Al₅O₁₂:Ce (hereinafter referred to as phosphor C) in a mixing ratio as shown in Table 1, respectively.

These long persistent phosphors were subjected to ultraviolet irradiation of 365 nm in wavelength to determine the emission chromaticity and the persistent intensity I₍₁₀₎ and I₍₆₀₎ at the lapse of 10 and 60 minutes after irradiation by a fluorescent lamp as a conventional light source D65 was cut off. The results are shown in Table 1.

### Examples 4 to 6

Long persistent phosphors of Examples 4 to 6 were prepared by mixing the phosphor A used in Example 1 as the first phosphor and an improved type of the yellow-emitting phosphor C as the second one represented by (Y, Gd)₃Al₅O₁₂:Ce in a mixing ratio as shown in Table 1, respectively. The improved phosphor is available from KASEI OPTONIX, LTD. as an item number KX-692B, which is prepared by adding additives to the phosphor C under a production condition at different firing temperature in different atmosphere ( hereinafter referred to as phosphor D).

These long persistent phosphors were subjected to ultraviolet irradiation of 365 nm in wavelength to determine the emission chromaticity and the persistent intensity I₍₁₀₎ and I₍₆₀₎ at the lapse of 10 and 60 minutes after irradiation by a fluorescent lamp as a conventional light source D65 was cut off. The results are shown in Table 1.

### Examples 7 to 9

Long persistent phosphors of Examples 7 to 9 were prepared by mixing the phosphor A used in Example 1 as the first phosphor and a phosphor of yellow emission as the second one represented by a compositional formula: Y₃Al₅O₁₂:Ce, Tb (hereinafter referred to as phosphor E) in a mixing ratio as shown in Table 1, respectively.

These long persistent phosphors were subjected to ultraviolet irradiation of 365 nm in wavelength to determine the emission chromaticity and the persistent intensity I₍₁₀₎ and I₍₆₀₎ at the lapse of 10 and 60 minutes after irradiation by a fluorescent lamp as a conventional light source D65 was cut off. The results are shown in Table 1.

### Examples 10 and 11

Long persistent phosphors of Examples 10 and 11 were prepared in a similar manner as described in Examples 4 to 6 except that a long persistent phosphor of greenish blue emission represented by a compositional formula: SrO 1.4 Al₂O₃ 0.2 SiO₂ 0.2 B₂O₃:Eu, Dy (hereinafter referred to as phosphor B) was used instead of the phosphor A as the first phosphor of Example 1.

These long persistent phosphors were subjected to ultraviolet irradiation of 365 nm in wavelength to determine the emission chromaticity and the persistent intensity I₍₁₀₎ and I₍₆₀₎ at the lapse of 10 and 60 minutes after irradiation by a fluorescent lamp as a conventional light source D65 was cut off. The results are shown in Table 1.

### Comparative Example

A long persistent phosphor of Comparative Example was prepared by mixing a phosphor represented by a compositional formula: Sr₄Al₁₄O₂₅:Eu, Dy (hereinafter referred to as phosphor F) and the phosphor C used in Example 1 in a mixing ratio as shown in Table 1.

The thus prepared long persistent phosphor was subjected to ultraviolet irradiation of 365 nm in wavelength to determine the emission chromaticity and the persistent intensity I₍₁₀₎ and I₍₆₀₎ at the lapse of 10 and 60 minutes after irradiation by a fluorescent lamp as a conventional light source D65 was cut off. The results are shown in Table 1.

### Reference Example

The phosphors A and B used in above Examples and Comparative Example were subjected to ultraviolet irradiation of 365 nm in wavelength to determine the emission chromaticity and the persistent intensity I₍₁₀₎ and I₍₆₀₎ at the lapse of 10 and 60 minutes after irradiation by a fluorescent lamp as a conventional light source D65 was cut off. The results are shown in Table 1.

**Table 1**

| | Component | | | | Emission color of mixed phosphor (x / y) | Persistent intensity (mcd / cm²) | |
|---|---|---|---|---|---|---|---|
| | First phosphor | | Second phosphor | | | (I₁₀) | (I₆₀) |
| | (weight %) | Emission color (x / y) | (weight %) | Emission color (x / y) | | | |
| Ex. 1 | A 65 | 0.144/0.136 | C 35 | 0.449/0.532 | 0.255/0.289 | 129 | 21 |
| Ex. 2 | A 60 | 0.144/0.136 | C 40 | 0.449/0.532 | 0.267/0.303 | 119 | 15 |
| Ex. 3 | A 46 | 0.144/0.136 | C 54 | 0.449/0.532 | 0.300/0.338 | 113 | 14 |
| Ex. 4 | A 90 | 0.144/0.136 | D 10 | 0.481/0.509 | 0.260/0.269 | 144 | 24 |
| Ex. 5 | A 83 | 0.144/0.136 | D 17 | 0.481/0.509 | 0.300/0.308 | 147 | 24 |
| E x. 6 | A 80 | 0.144/0.136 | D 20 | 0.481/0.509 | 0.318/0.329 | 143 | 23 |
| Ex. 7 | A 95 | 0.144/0.136 | E 5 | 0.457/0.528 | 0.227/0.250 | 131 | 20 |
| Ex. 8 | A 90 | 0.144/0.136 | E 10 | 0.457/0.528 | 0.270/0.303 | 138 | 21 |
| Ex. 9 | A 85 | 0.144/0.136 | E 15 | 0.457/0.528 | 0.300/0.338 | 146 | 24 |
| Ex. 10 | B 90 | 0.162/0.337 | D 10 | 0.481/0.509 | 0.300/0.442 | 125 | 18 |
| Ex. 11 | B 85 | 0.162/0.337 | D 15 | 0.481/0.509 | 0.338/0.457 | 108 | 15 |
| Comp. Ex. | F 60 | 0.160/0.340 | C 40 | 0.449/0.532 | 0.300/0.456 | 99 | 12 |
| Ref. Ex. 1 | A | 0.144/0.136 | | | 0.144/0.136 | 110 | 18 |
| Ref. Ex. 2 | B | 0.162/0.337 | | | 0.162/0.337 | 128 | 18 |

| | | | | | | | |
|---|---|---|---|---|---|---|---|
| (Note) Phosphor A: long persistent phosphor represented by Sr₂MgSi₂O₇:Eu, Dy; Phosphor B: greenish blue emitting long persistent phosphor represented by SrO 1.4 Al₂O₃ 0.2 SiO₂ 0.2 B₂O₃:Eu, Dy; Phosphor C: yellow emitting phosphor represented by (Y, Gd)₃Al₅O₁₂:Ce; Phosphor D: yellow emitting phosphor represented by (Y,Gd)₃Al₅O₁₂:Ce (improved type); Phosphor E: yellow emitting phosphor represented by Y₃Al₅O₁₂:Ce, Tb (improved type), and Phosphor F: long persistent phosphor represented by Sr₄Al₁₄O₂₅:Eu, Dy | | | | | | | |

It is apparent from Table 1 that I₍₆₀₎( the persistent intensity at the lapse of 60 minutes after cutting off the excitation light) of the phosphors prepared in Examples 1 to 11 is 14 mcd / cm² or higher in a state of powder thereof, which is higher than that of a conventional sample used in Comparative Example, and is sufficiently useful for practical use as a long persistent phosphor.

In Examples 1 and 4 to 9, each emission color shifts toward a longer wavelength side compared with that of the first phosphor used as a compositional component and thus comes close to the luminosity curve for luminance determination, so that emission of those phosphors of concern is brighter than that of the first phosphor. With regard to fluorescent lamps, display items and formed products of long persistence in which these phosphors are used, it is possible to make them brighter than the persistent luminance in a state of powder by optimizing concentration of the phosphor, thereby improving the visibility in the dark.

Long persistent phosphors of various emission colors can be prepared by controlling a mixing ratio of the first and the second phosphors as compositional components. Further, an appropriate selection of the second phosphor makes it possible to yield long persistent phosphors and their application products emitting white emission of satisfactorily higher color purity and higher luminance compared with conventional similar phosphors.

## Claims

1. A long persistent phosphor which comprises a mixture or mutual deposit of a first phosphor emitting phosphorescence of long persistence in a first wave range by ultraviolet absorption and a second phosphor emitting phosphorescence in a second wave range by at least partial absorption of emission in said first wave range, in which said first phosphor is at least one of a magnesium-strontium silicate phosphor (i) prepared by co-activating a complex-oxide containing strontium (Sr), magnesium (Mg) and silicon (Si) as a matrix metal component with europium (Eu) and dysprosium (Dy) and a strontium-aluminum silicate phosphor (ii) prepared by co-activating a complex-oxide containing strontium (Sr), aluminum (Al) and silicon (Si) as a matrix metal component with europium (Eu) and dysprosium (Dy).

2. A long persistent phosphor claimed in claim 1 in which said magnesium-strontium silicate phosphor (i) is represented by the following compositional formula:
*m*(Sr₁₋ₐM¹ₐ)O *n*(Mg_{1-b}M²b)O 2(Si_{1-c}Ge_{c})O₂ : EuₓDy_{y}
wherein M¹ represents one or more than two elements selected from Ca and Ba, M² represents one or more than two elements selected from Be, Zn and Cd and a, b, c, *m*, *n*, x and y are a numeral satisfied by requirements of 0 ≤ a ≤ 0.80, 0 ≤ b ≤ 0.2, 0 ≤ c ≤ 0.2, 1.5 ≤ *m* ≤ 3.5, 0.5 ≤ *n* ≤ 1.5, 1 x 10⁻⁵ ≤ x ≤ 1 X 10⁻¹ and 1 x 10⁻⁵ ≤ y ≤ 1 x 10⁻¹ and said strontium-aluminum silicate (ii) is represented by the following compositional formula:
(Sr₁₋ₓMₓ)O *a*Al₂O₃ *b*SiO₂ : Eu, Dy
wherein M represents one or more than two elements selected from Ca and Ba, and x, a and b are a numeral satisfied by requirements of 0 ≤ x ≤ 0.3, 0 ≤ *a* ≤ 2 and 0 < *b* ≤ 2.

3. A long persistent phosphor claimed in claim 2 in which said magnesium-strontium silicate phosphor (i) is represented by a compositional formula of Sr₂MgSi₂O₇ : Eu, Dy.

4. A long persistent phosphor claimed in any claim 1 to 3 in which said magnesium-strontium silicate phosphor (i) and/or said strontium-aluminum silicate phosphor (ii) contain halogen (X) or boron (B).

5. A long persistent phosphor claimed in claim 4 in which a content of said halogen (X) is 0.1 gram atom or less and that of said boron (B) is 0.6 gram atom or less per one mole of said phosphor matrix, respectively.

6. A long persistent phosphor claimed in any claim 1 to 5 in which a mixed color of fluorescence and phosphorescence in said first wave range and said second wave range is white.

7. A long persistent phosphor claimed in any claim 1 to 6 in which a content of said first phosphor is 30 to 99.5 % by weight of the long persistent phosphor in total.

8. A long persistent phosphor claimed in claim 7 in which a content of said first phosphor is 30 to 99 % by weight of the long persistent phosphor in total.

9. A long persistent phosphor claimed in any claim 1 to 8 in which said second phosphor is a cerium (Ce) and terbium (Tb)-co-activated rare earth aluminate phosphor represented by a compositional formula: (Y_{1-x-y}GdₓSm_{y})₃Al₅O₁₂ : Ce, Tb or a cerium (Ce)-activated rare earth aluminate phosphor represented by a compositional formula: (Y_{1-x-y}GdₓSm_{y})₃Al₅O₁₂ : Ce wherein x and y are a numeral satisfied by requirements of 0 < x ≤ 1,0 ≤ y < 1 and x + y ≤ 1.

10. A fluorescent lamp in which a long persistent phosphor claimed in any claim 1 to 9 is used as a fluorescent screen.

11. A fluorescent display item of long persistence in which at least a part of letters, figures and/or images of the display item is formed by a long persistent phosphor claimed in any claim 1 to 9.

12. A phosphorescent formed product of long persistence which comprises a long persistent phosphor claimed in any clam 1 to 9.
